# EUROPÄISCHE PATENTANMELDUNG

(11) **EP 4 461 514 A1**
(43) Veröffentlichungstag der Anmeldung: **13.11.2024**
(21) Anmeldenummer: 24153600.2
(22) Anmeldetag: 24.01.2024
(51) Int. Cl.: B29C 65/18, B29C 65/74, B65B 7/16, B65B 51/14

(54) **VERFAHREN UND STATION ZUM SIEGELN EINER DECKELFOLIE AN EINE VERPACKUNGSSCHALE**

(30) Priorität: 11.05.2023 DE 102023112514
(71) Anmelder: MULTIVAC Sepp Haggenmüller SE & Co. KG, 87787 Wolfertschwenden (DE)
(72) Erfinder: MADER, Andreas, 87463 Dietmannsried (DE)
(74) Vertreter: Grünecker Patent- und Rechtsanwälte PartG mbB

(57) **Zusammenfassung**

Die Erfindung bezieht sich auf ein Verfahren zum Siegeln einer Deckelfolie (8) an eine Verpackungsschale (7) mittels einer Siegelstation (2), eine Siegelstation (2) zum Siegeln einer Deckelfolie (8) an eine Verpackungsschale (7) oder eine Verpackungsmaschine (1), vorzugsweise Schalenverschließmaschine, aufweisend eine Siegelstation (2) zum Siegeln einer Deckelfolie (8) an eine Verpackungsschale (7). Dabei wird die Deckelfolie (8) an zumindest einem Klemmbereich (81) und einem Siegelbereich (82) geklemmt. An einem zwischen dem Klemmbereich (81) und dem Siegelbereich (82) befindlichen Übergangsbereich (83) wird ein zum Siegelbereich (82) ansteigender Temperaturgradient erzeugt. Es wird weiterhin eine Zugspannung (σ) auf den Übergangsbereich (83) erzeugt und die Deckelfolie an einem wärmsten Abschnitt (83a) des Übergangsbereichs (83) getrennt, wenn die Zugspannung (σ) mindestens einer Zugfestigkeit (Rm) der Deckelfolie (8) entspricht.

## Beschreibung

Die vorliegende Erfindung bezieht sich auf ein Verfahren zum Siegeln einer Deckelfolie an eine Verpackungsschale mittels einer Siegelstation, eine Siegelstation zum Siegeln einer Deckelfolie an eine Verpackungsschale oder eine Verpackungsmaschine, vorzugsweise Schalenverschließmaschine, aufweisend eine Siegelstation zum Siegeln einer Deckelfolie an eine Verpackungsschale.

### Stand der Technik

Aus dem Stand der Technik sind Verschließstationen und Verfahren zum Schneiden einer Deckelfolie bekannt. Beispielsweise lehrt die EP 2 441 683 A1 ein Verfahren zum Schneiden einer Deckelfolie mit einem Messer, das an einem Siegelrahmen angebracht und mit diesem bewegbar ist. Beim Kontakt des Messers mit der Deckelfolie schneidet das Messer die Deckelfolie.

Der Nachteil dieser Ausführung ist, dass zur Trennung der Deckelfolie ein Messer erforderlich ist. Auch können mit diesen Verfahren einige Deckelfolien, beispielsweise LID-Deckelfolien, nicht oder nur unzureichend geschnitten werden.

### Aufgabe

Ausgehend von dem bekannten Stand der Technik besteht die zu lösende technische Aufgabe darin, ein Verfahren zum Siegeln einer Deckelfolie an eine Verpackungsschale mittels einer Siegelstation, eine Siegelstation zum Siegeln einer Deckelfolie an eine Verpackungsschale oder eine Verpackungsmaschine, vorzugsweise Schalenverschließmaschine, aufweisend eine Siegelstation zum Siegeln einer Deckelfolie an eine Verpackungsschale anzugeben, die ein einfaches und effizientes Trennen einer Deckelfolie ermöglichen. Zugleich sollen im Idealfall Kosten reduziert werden.

### Lösung

Diese Aufgabe wird erfindungsgemäß durch ein Verfahren zum Siegeln einer Deckelfolie an eine Verpackungsschale mittels einer Siegelstation gemäß dem Anspruch 1, eine Siegelstation zum Siegeln einer Deckelfolie an eine Verpackungsschale gemäß dem Anspruch 14 oder eine Verpackungsmaschine, vorzugsweise Schalenverschließmaschine, aufweisend eine Siegelstation zum Siegeln einer Deckelfolie an eine Verpackungsschale gemäß dem Anspruch 15 gelöst.

Vorteilhafte Weiterbildungen der Erfindung sind in den Unteransprüchen erfasst.

Es wird ein Verfahren zum Siegeln einer Deckelfolie an eine Verpackungsschale mittels einer Siegelstation offenbart, wobei die Siegelstation ein Werkzeugoberteil und ein Werkzeugunterteil aufweist und wobei am Werkzeugoberteil ein Siegelrahmen mit einer beheizten Siegelfläche angeordnet ist. Bei dem Verfahren sind die folgenden Schritte vorgesehen: Klemmen von zumindest einem Klemmbereich der Deckelfolie zwischen dem Werkzeugoberteil und dem Werkzeugunterteil, Erwärmen eines Siegelbereichs der Deckelfolie mittels der beheizten Siegelfläche derart, dass ein zwischen dem Klemmbereich und dem Siegelbereich befindlicher Übergangsbereich der Deckelfolie einen zum Siegelbereich ansteigenden Temperaturgradienten erhält, Siegeln des Siegelbereichs der Deckelfolie an die Verpackungsschale an einer Verpackungsschalenaufnahme, Erzeugen einer Zugspannung im Übergangsbereich der Deckelfolie, Trennen der Deckelfolie an einem wärmsten Abschnitt des Übergangsbereichs, wenn die Zugspannung mindestens einer Zugfestigkeit der Deckelfolie entspricht. Das Verfahren bietet die Möglichkeit, die Deckelfolie auch ohne ein Messer zu trennen. Im Gegensatz zum Schneiden der Deckelfolie mit dem Messer basiert der Mechanismus des vorliegenden Verfahrens zum Trennen der Deckelfolie auf einer Wechselwirkung von Zugspannung und Temperaturgradient im Übergangsbereich. Zum Siegeln der Deckelfolie an die Verpackungsschale wird üblicherweise ein beheizter Siegelrahmen verwendet. Der Vorteil des vorliegenden Verfahrens ist, dass der Siegelrahmen eine Doppelfunktion erfüllen kann, nämlich einerseits den Siegelbereich der Folie erwärmen, um diesen zu siegeln, und andererseits den Übergangsbereich der Folie erwärmen. Somit werden für das Verfahren weniger Bauteile benötigt und im Idealfall ein Wartungsaufwand, etwa für das Reinigen, Schärfen oder Wechseln des Messers, sowie Kosten reduziert.

Weiterhin wird eine Siegelstation zum Siegeln einer Deckelfolie an eine Verpackungsschale offenbart. Die Siegelstation ist dazu ausgebildet, das Verfahren in wenigstens einer der in diesem Schutzrechtrecht offenbarten Varianten auszuführen.

Weiterhin wird eine Verpackungsmaschine, vorzugsweise Schalenverschließmaschine, offenbart. Die Verpackungsmaschine weist eine Siegelstation zum Siegeln einer Deckelfolie an eine Verpackungsschale auf.

Ein Aspekt der Erfindung betrifft ein Verfahren zum Siegeln einer Deckelfolie an eine Verpackungsschale mittels einer Siegelstation, wobei die Siegelstation ein Werkzeugoberteil und ein Werkzeugunterteil aufweist und wobei am Werkzeugoberteil ein Siegelrahmen mit einer beheizten Siegelfläche angeordnet ist. Bei dem Verfahren sind die folgenden Schritte vorgesehen:
- Klemmen von zumindest einem Klemmbereich der Deckelfolie zwischen dem Werkzeugoberteil und dem Werkzeugunterteil,
- Erwärmen eines Siegelbereichs der Deckelfolie mittels der beheizten Siegelfläche derart, dass ein zwischen dem Klemmbereich und dem Siegelbereich befindlicher Übergangsbereich der Deckelfolie einen zum Siegelbereich ansteigenden Temperaturgradienten erhält,
- Siegeln des Siegelbereichs der Deckelfolie an die Verpackungsschale an einer Verpackungsschalenaufnahme,
- Erzeugen einer Zugspannung im Übergangsbereich der Deckelfolie, und
- Trennen der Deckelfolie an einem wärmsten Abschnitt des Übergangsbereichs, wenn die Zugspannung mindestens einer Zugfestigkeit der Deckelfolie entspricht.

Dieses Verfahren ermöglicht es, die Deckelfolie einfach und effizient zu trennen, und zwar an dem wärmsten Abschnitt des Übergangsbereichs. Dieser wärmste Abschnitt wird durch den Temperaturgradienten im Übergangsbereich und die im Übergangsbereich vorherrschende Zugspannung bestimmt. Die Zugfestigkeit der Deckelfolie kann im Kontext der Erfindung eine Reißfestigkeit der Deckelfolie sein bzw. angeben. Sie kann die maximale mechanische Zugspannung angeben, mit der die Deckelfolie belastet werden kann, bis sie reißt.

Indem die Deckelfolie erwärmt wird, kann lokal ihre Reißfestigkeit abgesenkt werden. Vorzugsweise erfolgt die Erwärmung derart, dass am wärmsten Abschnitt des Übergangsbereichs der Deckelfolie deren Zugfestigkeit um 4 - 15 N/mm² gegenüber der Reißfestigkeit der Deckelfolie in ihrem kalten Zustand (d.h. bei Raumtemperatur) abgesenkt wird.

Beispielsweise kann die Reißfestigkeit der Deckelfolie in einem kalten Zustand ungefähr 20 N/mm² betragen. Beispielsweise kann der wärmste Abschnitt der Deckelfolie auf eine Temperatur erwärmt werden, bei der die Reißfestigkeit nur noch ungefähr 10 N/mm² bis 16 N/mm² beträgt.

Das Verfahren bietet weiterhin den Vorteil, dass für die Trennung der Deckelfolie keine zusätzlichen Komponenten zum Schneiden der Deckelfolie, z.B. ein Messer, benötigt werden. Im Idealfall kann ein Bauraum der Siegelstation verringert und somit ein Wartungsaufwand, etwa für das Schärfen oder Wechseln des Messers reduziert werden. Dies führt zu einer kostengünstigen Trennung der Deckelfolie.

Die Verpackungsschale kann dabei flach ausgebildet sein oder zumindest abschnittsweise eine Kontur, insbesondere eine Vertiefung, mit einem Rand aufweisen.

Der Klemmbereich kann umlaufend geschlossen ausgebildet sein. Es können auch mehrere Klemmbereiche, insbesondere einander gegenüberliegende Klemmebereiche, vorgesehen sein.

Ein Bereich der Deckelfolie zwischen dem zumindest einen Klemmbereich kann mittels einer Saugvorrichtung an eine Innenfläche des Siegelwerkzeugs gesaugt werden.

Die Innenfläche des Siegelrahmens kann mittels einer, insbesondere elektrischen, Heizvorrichtung beheizt werden. Die Siegelfläche des Siegelrahmens kann mittels einer, insbesondere elektrischen, Heizvorrichtung beheizt werden. Die Siegelfläche und die Innenfläche können mittels einer gemeinsamen Heizvorrichtung oder mittels unterschiedlicher Heizvorrichtungen beheizt werden.

Eine Temperatur der Heizvorrichtung und/oder der Innenfläche des Siegelrahmens und/oder der Siegelfläche des Siegelrahmens kann von der Deckelfolie, insbesondere deren Material und/oder deren Dicke, abhängen. Die Temperatur der Innenfläche des Siegelrahmens kann niedriger als eine Schmelztemperatur der Deckelfolie sein. Die Temperatur der Innenfläche kann mindestens einer Temperatur entsprechen, bei der die Deckelfolie verformbar ist.

Die Temperatur der Siegelfläche kann der Schmelztemperatur der Deckelfolie entsprechen. Die Temperatur der Siegelfläche oder des Siegelbereichs kann größer als 150 °C, insbesondere größer als 180 °C sein. Die Temperatur der Siegelfläche oder des Siegelbereichs kann kleiner als 220 °C, insbesondere kleiner als 200 °C sein.

Die Temperatur an dem wärmsten Abschnitt des Übergangsbereichs kann gleich der oder kleiner als die Temperatur des Siegelbereichs sein. Die Temperatur am wärmsten Abschnitt des Übergangsbereichs kann zumindest 70 %, insbesondere zumindest 80 %, der Temperatur des Siegelbereichs sein. Der Temperaturgradient am Übergangsbereich kann kleiner als 90 °C, insbesondere kleiner als 70 °C sein. Der Temperaturgradient am Übergangsbereich kann größer als 40 °C, insbesondere größer als 30 °C sein.

Das Material der Folie kann jedes geeignete Material sein. Beispielsweise kann das Material Polyethylen (PE) oder Ethylvinylalkohol (EVOH) sein oder umfassen. Optional kann die Folie aus einem Verbundwerkstoff aus mehreren Folien, beispielsweise aus Polyethylen (PE) oder Ethylvinylalkohol (EVOH), bestehen.

Die Dicke der Deckelfolie kann kleiner als 100 µm, insbesondere kleiner als 90 µm sein. Die Dicke der Deckelfolie kann größer als 70 µm, insbesondere größer als 80 µm sein. Die Dicke der Deckelfolie kann konstant sein.

Die zum Trennen der Deckelfolie erforderliche Zugspannung im Übergangsbereich der Deckelfolie kann von der Temperatur der Siegelfläche abhängen.

Der Klemmbereich der Deckelfolie kann unmittelbar zwischen dem Werkzeugoberteil und dem Werkzeugunterteil geklemmt werden. Optional kann der Klemmbereich der Deckelfolie mittelbar, zum Beispiel über einen Klemmrahmen, zwischen dem Werkzeugoberteil und dem Werkzeugunterteil geklemmt werden. Eine Klemmung der Deckelfolie zwischen dem Werkzeugoberteil und dem Werkzeugunterteil kann daher räumlich verstanden werden, also sowohl eine unmittelbare als auch eine mittelbare Klemmung darstellen.

Bei der mittelbaren Klemmung kann der Klemmbereich der Deckelfolie zwischen dem Werkzeugoberteil und dem Klemmrahmen angeordnet, und insbesondere dazwischen geklemmt, werden. Der Klemmrahmen kann an dem Werkzeugoberteil bewegbar montiert sein. Dazu kann der Klemmrahmen zumindest einen, insbesondere pneumatischen, Antrieb aufweisen. Der Antrieb kann zwischen dem Werkzeugoberteil und dem Klemmrahmen montiert sein, insbesondere außerhalb eines Bereichs in dem die Deckelfolie angeordnet wird. Der Klemmrahmen kann in Richtung des Werkzeugoberteils bewegt werden, sodass der Klemmbereich der Deckelfolie dazwischen eingeklemmt wird. Der Klemmrahmen kann abhängig von der Deckelfolie, insbesondere deren Dicke, und/oder einer erforderlichen Klemmkraft zum Klemmen der Deckelfolie unterschiedlich weit an das Werkzeugoberteil bewegt werden. Die Klemmkraft kann zwischen dem Werkzeugoberteil und dem Klemmrahmen erzeugt werden. Zwischen dem Klemmrahmen und dem Werkzeugoberteil kann ein Spalt bestehen, während der Klemmbereich der Deckelfolie zwischen dem Werkzeugoberteil und dem Klemmrahmen geklemmt ist. Der Klemmrahmen kann beispielsweise plattenförmig ausgebildet sein. Der Klemmrahmen kann räumlich zwischen dem Werkzeugoberteil und dem Werkzeugunterteil angeordnet sein. Das Werkzeugunterteil kann in Richtung des Werkzeugoberteils, insbesondere des Klemmrahmens, bewegt, insbesondere dagegen gedrückt, werden. Dadurch kann die Klemmung der zwischen dem Werkzeugoberteil und dem Klemmrahmen angeordneten Deckelfolie, insbesondere die auf die Deckelfolie wirkende Klemmkraft, erhöht werden. Die Klemmkraft kann zwischen dem Werkzeugoberteil und dem Werkzeugunterteil erzeugt werden. Das Werkzeugunterteil kann zum Werkzeugoberteil hinbewegt werden, um die Deckelfolie mittelbar zwischen dem Werkzeugunterteil und dem Werkzeugoberteil einzuklemmen. Insbesondere kann das Werkzeugunterteil so weit bewegt werden, dass es das Werkzeugoberteil kontaktiert. Insbesondere kann das Werkzeugunterteil so weit bewegt werden, dass der Spalt zwischen dem Klemmrahmen und dem Werkzeugoberteil geschlossen wird. Das Werkzeugunterteil kann so weit bewegt werden, dass es hinreichend fest, insbesondere mit einer ausreichenden Klemmkraft, an das Werkzeugoberteil gepresst wird, um die nachfolgenden Schritte des Siegelns, Trennens der Deckelfolie und/oder eines Evakuierens oder Begasens der Verpackungsschale durchzuführen.

Vorzugsweise wird der Siegelrahmen gegenüber dem Werkzeugunterteil bewegt, um die Zugspannung im Übergangsbereich der Deckelfolie zu erzeugen. Der Siegelrahmen kann zu diesem Zweck über eine insbesondere elektrische oder hydraulische Antriebsvorrichtung angetrieben werden. Der Vorteil dieser Variante besteht darin, dass kein zusätzliches Bauteil benötigt wird, um die Deckelfolie zu spannen. Der Siegelrahmen kann also eine Doppelfunktion ausführen, nämlich einerseits den Siegelbereich der Deckelfolie an die Verpackungsschale siegeln und andererseits die Zugspannung im Übergangsbereich der Deckelfolie erzeugen. Im Idealfall können ein Bauraum verkleinert, ein Wartungsaufwand reduziert und Kosten für das Verfahren gesenkt werden.

Vorzugsweise werden der Siegelrahmen und die Verpackungsschalenaufnahme gemeinsam mit dem Siegelbereich der Deckelfolie und der Verpackungsschale gegenüber dem Werkzeugunterteil bewegt, um die Zugspannung im Übergangsbereich der Deckelfolie zu erzeugen, wenn der Siegelbereich der Deckelfolie und die Verpackungsschale geklemmt sind. Zu diesem Zweck kann die Verpackungsschalenaufnahme, insbesondere über zumindest eine mit dem Werkzeugunterteil und der Verpackungsschalenaufnahme verbundene (Druck-)Feder, gegenüber dem Werkzeugunterteil bewegbar sein. Abhängig davon, welche Deckelfolie verwendet wird oder welcher Temperaturgradient im Übergangsbereich der Deckelfolie vorliegt, kann es sein, dass eine bloße Bewegung des Siegelrahmens gegenüber dem Werkzeugunterteil nicht ausreicht, um eine Zugspannung im Übergangsbereich der Deckelfolie zu erzeugen, die groß genug ist, dass die Zugfestigkeit der Deckelfolie erreicht oder überschritten wird. In einem solchen Fall kann es erforderlich sein, die Zugspannung weiter zu erhöhen, bis die Zugfestigkeit der Deckelfolie erreicht oder überschritten wird. Das Verfahren bietet daher eine einfache und effiziente Möglichkeit, die Zugspannung im Übergangsbereich der Deckelfolie zu erzeugen oder zu erhöhen.

Vorzugsweise wird der Temperaturgradient am Übergangsbereich kontaktlos durch Strahlungswärme vom Siegelrahmen erzeugt, und/oder durch Wärmeleitung in der Deckelfolie ausgehend von einem vom Siegelrahmen kontaktierten Bereich der Deckelfolie. Durch ein kontaktloses Erwärmen kann eine Abnutzung oder Beschädigung des Siegelrahmens, beispielsweise, weil die Deckelfolie am warmen Siegelrahmen festklebt, vermieden werden. Somit können Kosten für eine Instandhaltung oder Reparatur des Siegelrahmens reduziert werden. Durch einen Abstand zwischen Siegelrahmen und Übergangsbereich der Deckelfolie kann sichergestellt werden, dass der Übergangsbereich der Deckelfolie keiner zu starken Temperatureinwirkung durch den Siegelrahmen ausgesetzt wird. Ein zu starkes Aufheizen oder gar Schmelzen des Übergangsbereichs der Deckelfolie kann somit vermieden werden. Der Abstand des Übergangsbereichs von dem Siegelrahmen kann den Temperaturgradienten im Übergangsbereich beeinflussen. Der Abstand kann abnehmen, während die Zugspannung im Übergangsbereich der Deckelfolie erzeugt wird. Der kleinste Abstand kann mindestens 1,00 mm, insbesondere mindestens 2,00 mm betragen. Der kleinste Abstand kann höchstens 10,00 mm, insbesondere höchstens 5,00 mm betragen.

Vorzugsweise ist der Übergangsbereich der Deckelfolie in der Nähe des Siegelbereichs oder grenzt an den Siegelbereich an. Dies bietet den Vorteil, dass der Übergangsbereich einfach und effizient erwärmt werden kann. Der Siegelbereich wird zum Siegeln mittels der beheizten Siegelfläche des Siegelrahmens aufgeheizt. Ist der Übergangsbereich der Deckelfolie in der Nähe des Siegelbereichs angeordnet oder grenzt an den Siegelbereich an, kann die Wärme des Siegelbereichs zumindest teilweise an den Übergangsbereich weitergeleitet werden. Das Verfahren bietet somit eine einfache Möglichkeit, am Übergangsbereich der Deckelfolie einen zum Siegelbereich ansteigenden Temperaturgradienten zu erzeugen.

Vorzugsweise erfolgt das Trennen der Deckelfolie, während der Siegelbereich der Deckelfolie und die Verpackungsschale geklemmt sind. Dadurch kann die Zuverlässigkeit des Verfahrens erhöht werden. Wird die Deckelfolie getrennt, während der Siegelbereich der Deckelfolie und die Verpackungsschale geklemmt sind, kann sichergestellt werden, dass der Siegelbereich der Deckelfolie und die Verpackungsschale zuverlässig gesiegelt werden können.

Vorzugsweise erfolgt das Trennen der Deckelfolie vor oder während des Siegelns der Deckelfolie an die Verpackungsschale. Eine Siegelung wird zwischen dem Siegelbreich der Deckelfolie und der Verpackungsschale erzeugt. Wird die Deckelfolie nach dem Siegeln getrennt, kann die Siegelung beschädigt werden. Das Verfahren bietet somit den Vorteil, dass eine unvollständige und/oder beschädigte Siegelung vermeiden und die Qualität der Siegelung erhöht werden kann. Im Idealfall kann auch eine Zeit für das Verfahren reduziert und eine Produktivität erhöht werden.

Vorzugsweise wird vor dem Siegeln ein Inneres der Verpackungsschale evakuiert und/oder begast. Dies hat den Vorteil, dass eine Qualität und/oder Haltbarkeit eines Inhalts der Verpackungsschale und der Deckelfolie gezielt beeinflusst, insbesondere verbessert, werden kann. Zudem kann eine Optik der versiegelten Verpackungsschale und der Deckelfolie beeinflusst, insbesondre verbessert, werden.

Vorzugsweise ist die Zugspannung konstant über den gesamten Übergangsbereich. Dadurch kann vermieden werden, dass am Übergangsbereich unterschiedlich große Zugspannungen herrschen, die eine zuverlässige Trennung der Deckelfolie an einem gewünschten Abschnitt verhindern können. Somit kann die Zuverlässigkeit und Effizienz des Verfahrens verbessert werden.

Die von einem der Aspekte (Verfahren, Siegelstation oder Verpackungsmaschine) beschriebenen Merkmale oder Erläuterungen können einzeln oder in Kombination auf die anderen Aspekte übertragen und mit diesen kombiniert werden.

Im Folgenden wird die Erfindung anhand von beispielhaften Ausführungsformen erläutert. Es zeigen:
- Figur 1: eine schematische Seitenansicht einer Verpackungsmaschine gemäß einer Ausführungsform;
- Figuren 2a-2c: eine schematische ausschnittsweise Seitenansicht einer Siegelstation gemäß einer Ausführungsform; und
- Figuren 3a-3e: eine schematische ausschnittsweise Seitenansicht der Siegelstation gemäß einer weiteren Ausführungsform.

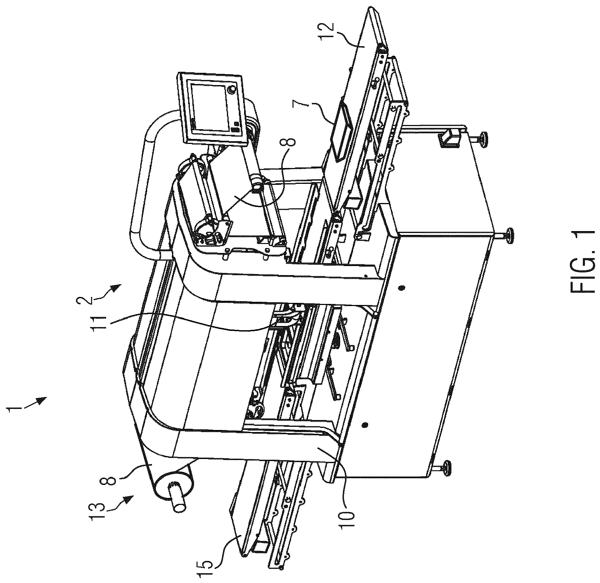

Figur 1 zeigt eine schematische Seitenansicht einer Verpackungsmaschine 1 gemäß einer Ausführungsform. Diese kann, wie im vorliegenden Beispiel, eine Schalenverschließmaschine sein. Sie kann ein Gestell 10 umfassen. Die Verpackungsmaschine 1 kann des Weiteren ein Zuführband 12 aufweisen. Sie kann außerdem eine Siegelstation 2 aufweisen, die später noch näher beschrieben werden wird. Durch das Zuführband 12 können befüllte aber zu diesem Zeitpunkt noch unverschlossene Verpackungsschalen 7 zu der Siegelstation 2 befördert werden. Die Verpackungsschalen 7 können mit einer Greifereinrichtung 11 in die Siegelstation 2 umgesetzt werden und dort mit einer von oben zugeführten Deckfolie 8 verschlossen werden, beispielsweise durch Ansiegeln der Deckfolie 8. Vor oder während des Ansiegelns der Deckelfolie 8 können den Verpackungen bzw. Verpackungsverbünden entsprechende Bereiche der Deckfolie 8 in der Siegelstation 2 aus der Bahn der Deckfolie 8 ausgeschnitten werden. Es verbleibt ein Folienrestgitter der Deckfolie 8, welches mit einer Vorrichtung 13 zum Aufwickeln der Folie 8 aufgewickelt wird. Die derart fertiggestellten Verpackungen können über die Greifereinrichtung 11 aus der Siegelstation 2 auf ein Abführband 15 umgesetzt werden.

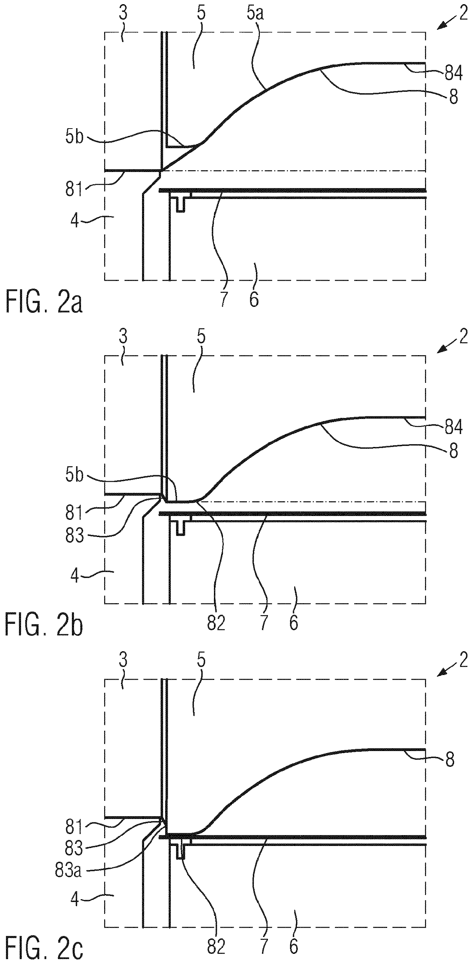

In den Figuren 2a-2c ist eine Siegelstation 2 in einer schematischen Schnittansicht in unterschiedlichen Phasen des Siegelvorgangs dargestellt. Die Figuren 2a-2c zeigen je nur einen ersten Ausschnitt der Schnittansicht der Siegelstation 2. Dieser erste Ausschnitt kann am rechten Bildrand gespiegelt werden, um die vollständige Schnittansicht darzustellen.

In Figur 2a sind ein Werkzeugoberteil 3 mit einem Siegelrahmen 5, ein Werkzeugunterteil 4 und eine Verpackungsschalenaufnahme 6 dargestellt. Der Siegelrahmen 5 weist eine Innenfläche 5a sowie eine beheizte Siegelfläche 5b auf, die je mit einer nicht dargestellten Heizvorrichtung beheizt werden. An der Verpackungsschalenaufnahme 6 ist eine Verpackungsschale 7 angeordnet. Die Verpackungsschale 7 ist im Ausführungsbeispiel flach ausgebildet. Figur 2a zeigt weiterhin eine Deckelfolie 8 mit einem umlaufend geschlossenen Klemmbereich 81, der zwischen dem Werkzeugoberteil 3 und dem Werkzeugunterteil 4, insbesondere unmittelbar, geklemmt ist. Die Deckelfolie 8 besteht beispielsweise aus einem Verbundwerkstoff aus z.B. drei Folien, von denen die beiden äußeren Folien aus Polyethylen (PE) und die mittlere Folie aus Ethylvinylalkohol (EVOH) besteht. Eine Dicke der Deckelfolie 8 beträgt z.B. 95 µm und ist im gesamten Übergangsbereich 83 konstant. Eine Schmelztemperatur dieser Deckelfolie 8 beträgt ungefähr 170 °C. Eine Zugfestigkeit Rm der Deckelfolie 8 beträgt in einem kalten Zustand ungefähr 20 N/mm². Die Deckelfolie 8 kann ab einer Temperatur von ungefähr 80 °C verformt werden. Die Angaben zu Material, Temperatur und Dicke der Deckelfolie 8 sind lediglich beispielhaft gewählt und schränken den Schutzbereich nicht ein. Ein Innenbereich 84 der Deckelfolie 8 zwischen dem Klemmbereich 81 wird mittels einer nicht dargestellten Saugvorrichtung an die Innenfläche 5a des Siegelwerkzeugs 5 gesaugt, die eine Temperatur von ungefähr 85 °C aufweist. In Figur 2a kontaktiert die Siegelfläche 5b des Siegelrahmens 5 die Deckelfolie 8 nicht.

In Figur 2b ist die Siegelstation 2 in einer Position dargestellt, in der der Siegelrahmen 5 in Richtung des Werkzeugunterteils 4 bewegt ist. Während dieser Bewegung kontaktiert die Siegelfläche 5b des Siegelrahmens 5 einen Siegelbereich 82 der Deckelfolie 8 und erwärmt diesen. Zwischen dem Klemmbereich 81 und dem Siegelbereich 82 befindet sich ein Übergangsbereich 83. Der Übergangsbereich 83 grenzt im Ausführungsbeispiel an den Siegelbereich 82 an. Bei der Bewegung des Siegelrahmens 5 nähert sich dieser neben dem Siegelbereich 82 auch dem Übergangsbereich 83 an. Dabei besteht aber kein Kontakt zwischen dem Siegelrahmen 5 und dem Übergangsbereich 83. Der Übergangsbereich 83 wird kontaktlos durch Strahlungswärme vom Siegelrahmen 5 erwärmt, sodass die Temperatur an einem wärmsten Abschnitt 83a des Übergangsbereichs 83 ungefähr 160 °C beträgt. In Richtung des Klemmbereichs 81 nimmt die Temperatur des Übergangsbereichs 83 stetig bis auf eine Temperatur von ungefähr 80 °C ab, da dort keine Wärme auf den Übergangsbereich 83 einwirkt. Somit erfährt der Übergangsbereich 83 der Deckelfolie 8 einen zum Siegelbereich 82 ansteigenden Temperaturgradienten von ungefähr 80 °C. Während der Bewegung des Siegelrahmens 5 wird in dem Übergangsbereich 83 der Deckelfolie 8 eine wachsende Zugspannung σ erzeugt. Da die Dicke der Deckelfolie 8 im gesamten Übergangsbereich 83 konstant ist, ist die Zugspannung σ über den gesamten Übergangsbereich 83 konstant.

In Figur 2c ist die Siegelstation 2 in einer Position dargestellt, in der der Siegelrahmen 5 ausgehend von der Figur 2b noch weiter in Richtung des Werkzeugunterteils 4 bewegt ist. Der Siegelrahmen 5 bewegt dabei den Siegelbereich 82 mit, bis sich der Siegelbereich 82 der Deckelfolie 8 und die Verpackungsschale 7 an der Verpackungsschalenaufnahme 6 kontaktieren und geklemmt sind. Durch die Bewegung des Siegelrahmens 5 bzw. des Siegelbereichs 82 wird die Zugspannung σ im Übergangsbereich 83 weiter erhöht. Aufgrund der Wärmeeinwirkung ist die Zugfestigkeit Rm der Deckelfolie 8 an dem wärmsten Abschnitt 83a des Übergangsbereichs 83 auf ungefähr 12 bis 16 N/mm² reduziert. In Figur 2c hat die Zugspannung σ die Zugfestigkeit Rm der Deckelfolie 8 im wärmsten Abschnitt 83a des Übergangsbereichs 83 erreicht; folglich wurde die Deckelfolie 8 dort getrennt. Zwischen dem Siegelbereich 82 der Deckelfolie 8 und der Verpackungsschale 7 erfolgt nach dem Trennvorgang eine Siegelung.

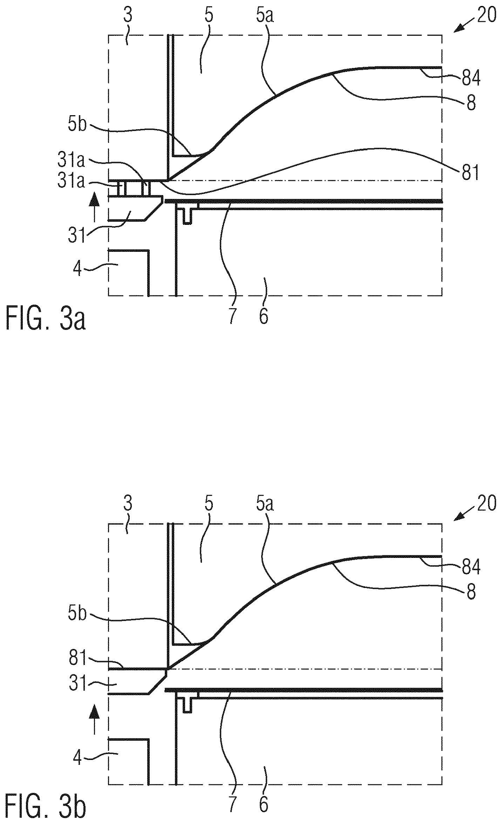

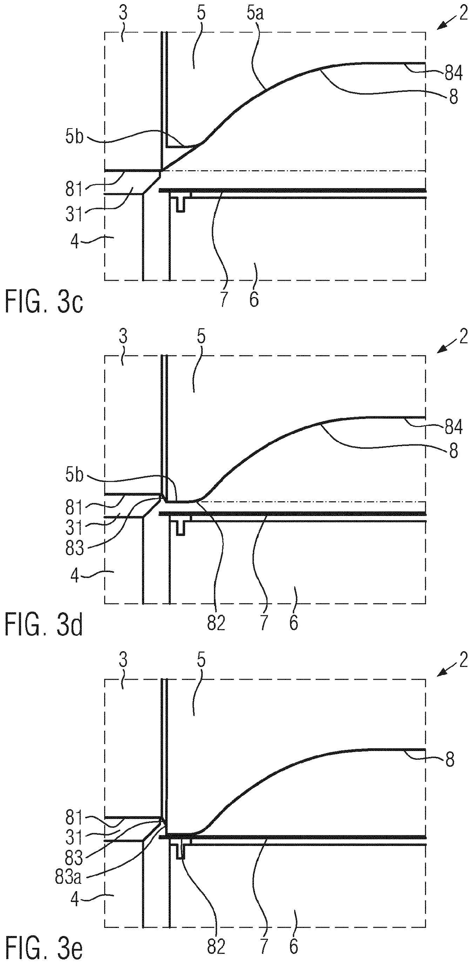

Die Figuren 3a-3e zeigen eine schematische Schnittansicht einer Siegelstation 20. Die Siegelstation 20 ist im Wesentlichen gleich aufgebaut wie die Siegelstation 2. Die Elemente der Siegelstation 20, die denen der Siegelstation 2 entsprechen, sind mit denselben Bezugszeichen gekennzeichnet.

Im Gegensatz zu der Siegelstation 2 wird mittels der Siegelstation 20 eine mittelbare Klemmung des Klemmbereichs 81 der Deckelfolie 8 zwischen dem Werkzeugoberteil 3 und dem Werkzeugunterteil 4 über einen plattenförmigen Klemmrahmen 31 realisiert. Räumlich ist der Klemmrahmen 31 zwischen dem Werkzeugoberteil 3 und dem Werkzeugunterteil 4 angeordnet und an dem Werkzeugoberteil 3 relativ zu diesem bewegbar montiert. Zum Bewegen des Klemmrahmens 31 sind zwei pneumatische Antrieb 31a an dem Werkzeugoberteil 3 und dem Klemmrahmen 31 montiert (siehe Figur 3a).

Nachdem die Deckelfolie 8 zwischen dem Werkzeugoberteil 3 und dem Klemmrahmen 31 angeordnet wurde, wird der Klemmrahmen 31 mittels der Antriebe 31a in Richtung des Werkzeugoberteils 3 bewegt, um den Klemmbereich 81 der Deckelfolie 8 einzuklemmen (siehe Figuren 3a-3b).

Um die Klemmung der Deckelfolie 8 zwischen dem Werkzeugoberteil 3 und dem Klemmrahmen 31 zu erhöhen, wird das Werkzeugunterteil 4 relativ zum Werkzeugoberteil 3 in Richtung des Klemmrahmens 31 bewegt. Dadurch wird die Deckelfolie 8 mittelbar zwischen dem Werkzeugunterteil 4 und dem Werkzeugoberteil 3 eingeklemmt. Wie aus Figur 3c ersichtlich, wird das Werkzeugunterteil 4 so weit bewegt, bis es das Werkzeugoberteil 3 kontaktiert und den Klemmbereich 81 der Deckelfolie 8 hinreichend fest einklemmt, um die dem Klemmen nachfolgenden Schritte des Trennens und Siegelns der Deckelfolie (siehe Figuren 3d-3e) durchzuführen. Das Trennen und Siegeln der Deckelfolie 8 erfolgt analog zu den vorgehend beschriebenen und in den Figuren 2b-2c dargestellten Verfahrensschritten.

## Patentansprüche

1. Verfahren zum Siegeln einer Deckelfolie (8) an eine Verpackungsschale (7) mittels einer Siegelstation (2),
wobei die Siegelstation (2) ein Werkzeugoberteil (3) und ein Werkzeugunterteil (4) aufweist und wobei am Werkzeugoberteil (3) ein Siegelrahmen (5) mit einer beheizten Siegelfläche (5b) angeordnet ist, wobei das Verfahren die folgende Schritten umfasst:
Klemmen von zumindest einem Klemmbereich (81) der Deckelfolie (8) zwischen dem Werkzeugoberteil (3) und dem Werkzeugunterteil (4),
Erwärmen eines Siegelbereichs (82) der Deckelfolie (8) mittels der beheizten Siegelfläche (5b) derart, dass ein zwischen dem Klemmbereich (81) und dem Siegelbereich (82) befindlicher Übergangsbereich (83) der Deckelfolie (8) einen zum Siegelbereich (82) ansteigenden Temperaturgradienten erhält,
Siegeln des Siegelbereichs (82) der Deckelfolie (8) an die Verpackungsschale (7) an einer Verpackungsschalenaufnahme (6), und
Erzeugen einer Zugspannung (σ) im Übergangsbereich (83) der Deckelfolie (8),
**gekennzeichnet durch**
Trennen der Deckelfolie (8) an einem wärmsten Abschnitt (83a) des Übergangsbereichs (83), wenn die Zugspannung (σ) mindestens einer Zugfestigkeit (Rm) der Deckelfolie (8) entspricht.

2. Verfahren nach Anspruch 1,
**dadurch gekennzeichnet, dass** der Siegelrahmen (5) gegenüber dem Werkzeugunterteil (4) bewegt wird, um die Zugspannung (σ) im Übergangsbereich (83) der Deckelfolie (8) zu erzeugen.

3. Verfahren nach Anspruch 1 oder 2,
**dadurch gekennzeichnet, dass** der Siegelrahmen (5) und die Verpackungsschalenaufnahme (6) gemeinsam mit dem Siegelbereich (82) der Deckelfolie (8) und der Verpackungsschale (7) gegenüber dem Werkzeugunterteil (4) bewegt werden, um die Zugspannung (σ) im Übergangsbereich (83) der Deckelfolie (8) zu erzeugen, wenn der Siegelbereich (82) der Deckelfolie (8) und die Verpackungsschale (7) geklemmt sind.

4. Verfahren nach einem der vorangehenden Ansprüche,
**dadurch gekennzeichnet, dass** der Temperaturgradient am Übergangsbereich (83) kontaktlos über den Siegelrahmen (5) erzeugt wird.

5. Verfahren nach einem der vorangehenden Ansprüche,
**dadurch gekennzeichnet, dass** der Übergangsbereich (83) der Deckelfolie (8) in der Nähe des Siegelbereichs (82) ist oder an den Siegelbereich (82) angrenzt.

6. Verfahren nach einem der vorangehenden Ansprüche,
**dadurch gekennzeichnet, dass** das Trennen der Deckelfolie (8) erfolgt, während der Siegelbereich (82) der Deckelfolie (8) und die Verpackungsschale (7) geklemmt sind.

7. Verfahren nach einem der vorangehenden Ansprüche,
**dadurch gekennzeichnet, dass** das Trennen der Deckelfolie (8) vor oder während des Siegelns der Deckelfolie (8) an die Verpackungsschale (7) erfolgt.

8. Verfahren nach einem der vorangehenden Ansprüche,
**dadurch gekennzeichnet, dass** vor dem Siegeln ein Inneres der Verpackungsschale (7) evakuiert und/oder begast wird.

9. Verfahren nach einem der vorangehenden Ansprüche,
**dadurch gekennzeichnet, dass** die Zugspannung (σ) konstant über den gesamten Übergangsbereich (83) ist.

10. Verfahren nach einem der vorangehenden Ansprüche,
**dadurch gekennzeichnet, dass** die zum Trennen der Deckelfolie (8) erforderliche Zugspannung (σ) im Übergangsbereich (83) der Deckelfolie (8) von einer Temperatur der Siegelfläche (5b) abhängt,
insbesondere wobei die Zugfestigkeit (Rm) der Deckelfolie (8) im Übergangsbereich (83), insbesondere an dem wärmsten Abschnitt (83a), durch das Erwärmen des Siegelbereichs (82) gesenkt wird.

11. Verfahren nach einem der vorangehenden Ansprüche,
**dadurch gekennzeichnet, dass** der Klemmbereich (81) der Deckelfolie (8) unmittelbar zwischen dem Werkzeugoberteil (3) und dem Werkzeugunterteil (4) geklemmt wird.

12. Verfahren nach einem der vorangehenden Ansprüche,
**dadurch gekennzeichnet, dass** der Klemmbereich (81) der Deckelfolie (8) mittelbar zwischen dem Werkzeugoberteil (3) und dem Werkzeugunterteil (4) geklemmt wird, insbesondere wobei das Werkzeugoberteil (3) einen Klemmrahmen (31) aufweist, wobei der Klemmbereich (81) der Deckelfolie (8) zwischen dem Klemmrahmen (31) und dem Werkzeugoberteil (3) angeordnet wird, und wobei der Klemmrahmen (31) räumlich zwischen dem Werkzeugoberteil (3) und dem Werkzeugunterteil (4) angeordnet ist.

13. Verfahren nach Anspruch 12,
**dadurch gekennzeichnet, dass** der Klemmrahmen (31) zum Werkzeugoberteil (3) hinbewegt wird, sodass der Klemmbereich (81) der Deckelfolie (8) dazwischen eingeklemmt wird, und
das Werkzeugunterteil (4) zum Werkzeugoberteil (3), insbesondere dem Klemmrahmen (31), hinbewegt wird, um die Deckelfolie (8) mittelbar zwischen dem Werkzeugunterteil (4) und dem Werkzeugoberteil (3) einzuklemmen, und insbesondere die Klemmung der Deckelfolie (8) zu erhöhen.

14. Siegelstation (2) zum Siegeln einer Deckelfolie (8) an eine Verpackungsschale (7), die dazu ausgebildet ist, das Verfahren nach einem der vorangehenden Ansprüche auszuführen.

15. Verpackungsmaschine (1), vorzugsweise Schalenverschließmaschine, aufweisend eine Siegelstation (2) zum Siegeln einer Deckelfolie (8) an eine Verpackungsschale (7), die dazu ausgebildet ist, das Verfahren nach einem der Ansprüche 1 bis 13 auszuführen.
